# EUROPEAN PATENT APPLICATION

(11) **EP 1 591 828 A2**
(43) Date of publication of application: **02.11.2005**
(21) Application number: 05102829.8
(22) Date of filing: 11.04.2005
(51) Int. Cl.: G03B 9/06

(54) **An Iris Device**

(30) Priority: 23.04.2004 KR 2004028127
(71) Applicant: SAMSUNG ELECTRONICS CO., LTD., Suwon-si, Gyeonggi-Do 442-742 (KR)
(72) Inventor: OH, Eui-kuen 111-1704, Byeoksan Apt., Mangpo-dong, Gyeonggi-do (KR)
(74) Representative: Geary, Stuart Lloyd

(57) **Abstract**

An iris diaphragm includes at least one lens shutter to adjust the size of an aperture that incident light passes through according to movement of the at least one lens shutter. At least one ND filter is installed to move independently of the lens shutter to reduce the amount of incident light by covering the aperture stopped-down by the lens shutter according to the movement of the at least one ND filter.

## Description

The present invention relates to an iris device for a camera comprising an iris leaf and a mechanism for moving the iris leaf to set the device's aperture.

Camcorders are one example of image capture and playback devices. Camcorders are used today for capturing both moving and still images. A camcorder includes a camera unit, a signal conversion unit, a deck for recording and playing back captured images, and a display unit. The camcorder usually uses a cassette tape as a recording medium to record captured images. In recent years, a lot of attention has been focused on making the camcorder and recording medium smaller. To achieve this, the captured images have been recorded onto a hard disk drive. The smaller and lighter camcorder uses a hard disk instead of a deck.

A module containing both the camera unit and a lens barrel, are installed inside the main body of the camcorder. The lens barrel has a focusing lens module and a zoom lens. The focusing lens and the zoom lens are driven by a motor which is installed in the lens barrel.

Also, the lens barrel includes a lens shutter for adjusting the amount of light entering the lens barrel. Thus, in effect, a plurality of motor-driven shutter members move so as to adjust the amount of light passing through the lens.

Besides the lens motor, in the above configuration, a plurality of motors are provided outside of the lens barrel. Having a number of motors means that the camcorder is increased in size.

Moreover, as the lens motor is mounted outside the cylindrical lens barrel, the lens barrel is limited in shape.

A Neutral Density (ND) filter is also housed in the lens barrel. The ND filter reduces the amount of incident light that passes through the lens, and suppresses diffraction which reduces resolution. As a result, resolution is improved.

However, a problem arises because the ND filter is bonded or coupled to the lens shutter and moves with the lens shutter as one body. Therefore, irrespective of any changes made to the diaphragm or the amount the shutter is opened, a certain part of the light path is always blocked by the ND filter. Although this fact does not have a great impact on the resolution at high brightness, it greatly reduces resolution at low brightness because the amount of light passing through the lens is very low.

Accordingly, it is a primary object of the present invention to provide an iris diaphragm with an improved structure so that the ND filter and the lens shutter can be operated independently.

It is another object of the present invention to provide an iris diaphragm driving device with an improved structure capable of driving an ND filter independently of the lens shutter.

It is still another object of the present invention to provide a camera unit having an ND filter that operates independently of a lens shutter.

It is still another object of the present invention to provide an iris diaphragm control method for separately driving a lens shutter and an ND filter.

The present invention relates to an iris device for a camera comprising an iris leaf and a mechanism for moving the iris leaf to set the device's aperture.

An iris device according to the present invention is characterised by a neutral density filter blade configured to be moved by said mechanism such that the neutral density filter blade leads the iris leaf when stopping down the aperture.

Additional preferred and optional features are set forth in claims 2 and 3 appended hereto.

An embodiment of the present invention will now be described, by way of example only, and with reference to the accompanying drawings, in which:
Figure 1 is a schematic cross-sectional view of a camera unit according to one embodiment of the present invention;
Figure 2 is an exploded perspective view of an iris diaphragm driving device of Figure 1;
Figure 3 is a cross-sectional view of an iris diaphragm driving device of Figure. 2;
Figure 4 is a plan view of an iris diaphragm of Figure 3 connected to a driving unit;
Figure 5A and Figure 5B respectively show a perspective view of a rotor of Figure 2 connected to a stator assembly;
Figure 6A and Figure 6B respectively show a perspective view of an iris diaphragm driving device of Figure 2 before an iris diaphragm is assembled thereto;
Figure 7 is a perspective view of a completely assembled iris diaphragm driving device of Figure 2;
Figure 8A and Figure 8B respectively show a plan view of an iris diaphragm of

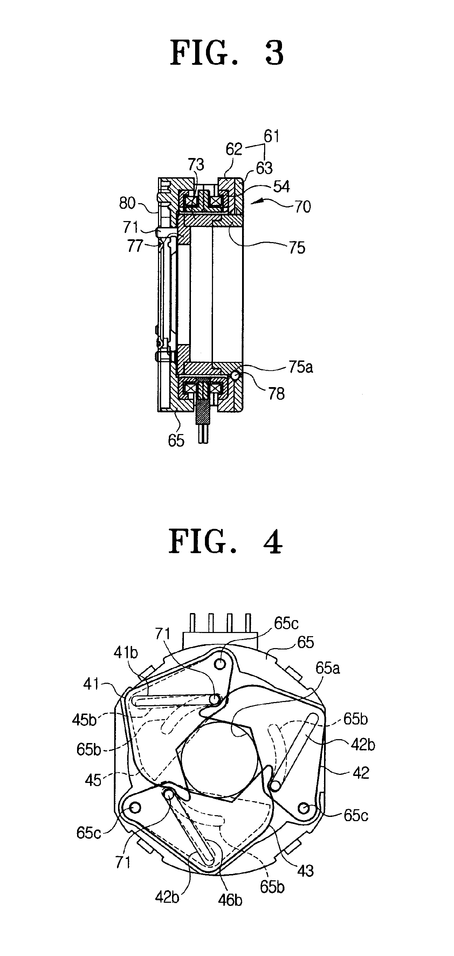

Figure 4 during operation;

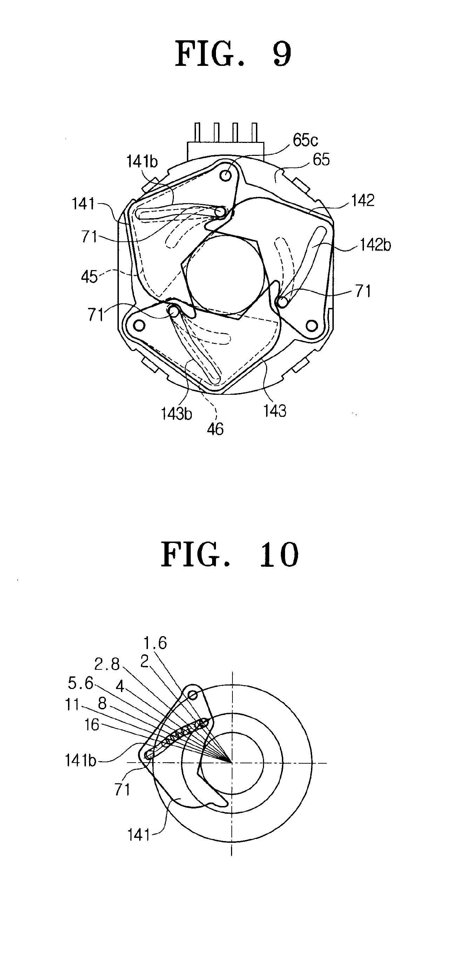

Figure 9 and Figure 10 are schematic plan views of an iris diaphragm driving device according to another embodiment of the present invention;

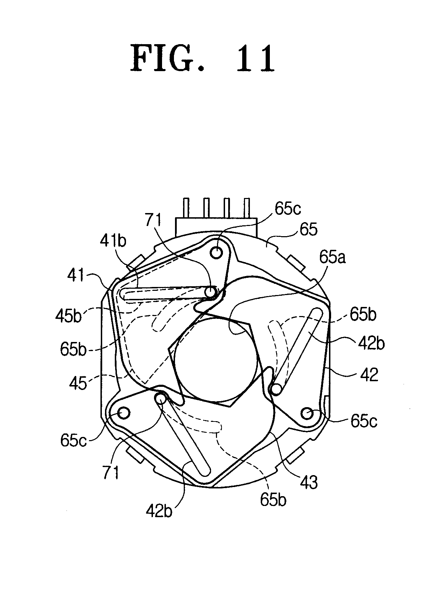

Figures 11 to 13 respectively show schematic plan views of the operation of an iris diaphragm driving device according to another embodiment of the present invention.

Throughout the drawings, like reference numbers should be understood to refer to like elements, features and structures. The matters defined in the description, such as a detailed construction and elements thereof, are provided to assist in a comprehensive understanding of the invention. Also, descriptions of well-known functions and elements are not described in detail for conciseness and clarity.

An iris diaphragm, an iris diaphragm driving device, a camera unit and an iris diaphragm control method in accordance with exemplary embodiments of the present invention are described in detail with reference to the accompanying drawings.

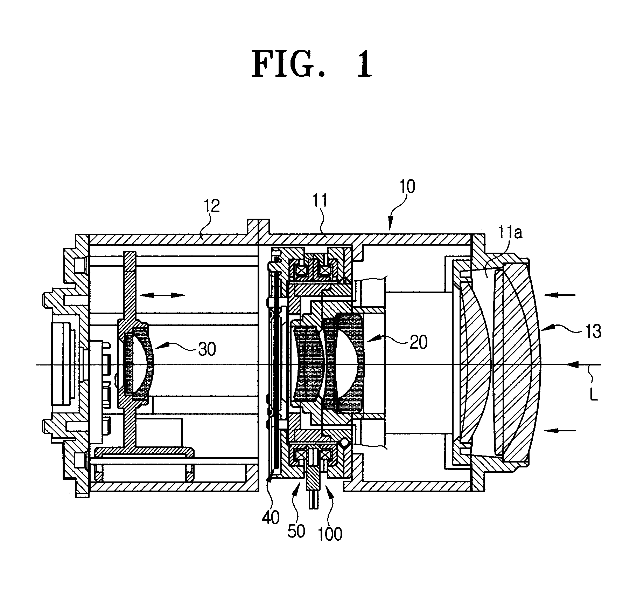

Referring to Figure 1, the camera unit includes a lens barrel 10, a zoom lens module 20 and a focusing lens module 30 housed in the lens barrel 10, an iris diaphragm 40 (hereinafter, referred to as an iris diaphragm unit), and a driving unit 50 for driving the diaphragm unit 40.

The lens barrel 10 is substantially cylindrical and is a pair of connected lens barrels 11, 12. An object lens module 13 is located at the front end of the entrance 11a of the first lens barrel 11, and a substrate having a CCD ("charge coupled device") module is located at the rear end of the second lens barrel 12.

The zoom lens module 20 is movably installed in the lens barrel 10. In other words, the zoom lens module moves back and forth by a predetermined distance inside the second lens barrel 12. This movement is in a direction substantially parallel to incident light L enabling the lens to zoom in and out on an object. This movement is effected by a transfer means (not shown).

The focusing lens module 30 is movably installed in the lens barrel 10. More specifically, the focusing lens module 30 is located beside the zoom lens module 20 to focus the lens on an object. Similar to the zoom lens module 20, the focusing lens module 30 is moved back and forth by a predetermined distance inside the lens barrel 10 in a direction parallel to incident light L. This movement is effected by the transfer means which is known. For example, the transfer means may consist of a guide shaft is which supports the modules 20, 30 in the lens barrel 10, and lead screws which are rotated by a motor may be used to selectively move the modules 20, 30. Since techniques for implementing the transfer means are known, no further details will be provided.

The diaphragm unit 40 is housed in the lens barrel 10. Preferably, the diaphragm is located between the modules 20, 30. The diaphragm unit 40 adjusts the amount of light incident into the lens barrel 10. The diaphragm unit 40 is installed in a direction which substantially transverses the direction of incident light. In other words, so that the light passes through the diaphragm unit 40. The diaphragm unit 40 is described in more detail below.

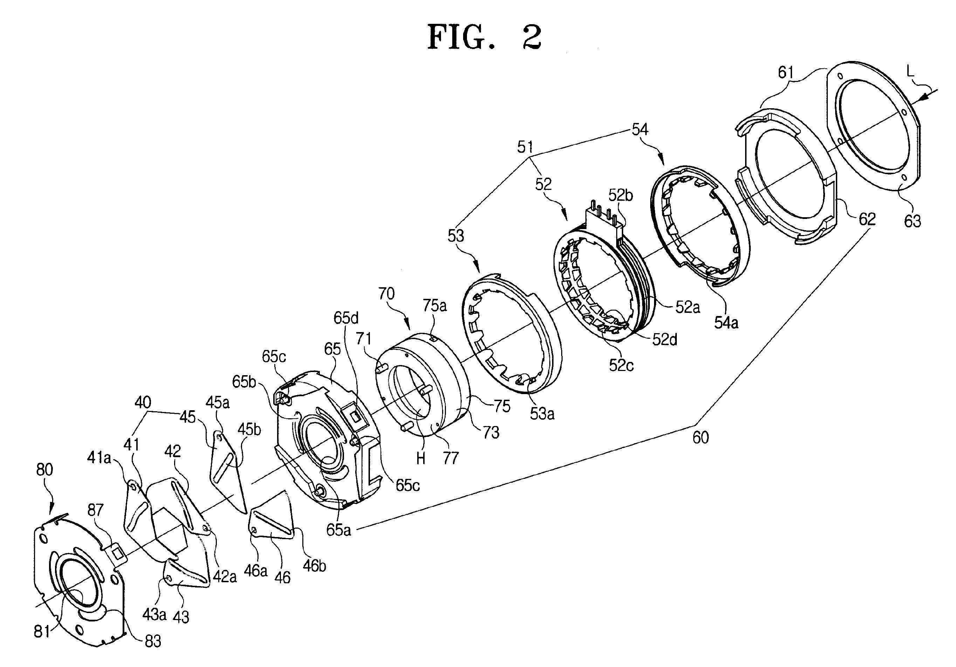

The driving unit 50 is located in the lens barrel 10. Referring to Figure 2, the driving unit 50 includes a stator assembly 51, a motor housing 60, and a rotor 70 located in the stator assembly 51.

The stator assembly 51 is supported inside the motor housing 60. The stator assembly 51 includes a ring-type bobbin 52, and first and second stator members 53, 54 connected to both sides of the bobbin 52.

A coil 52a is wound around the bobbin 52, and the coil 52a is electrically coupled to an external terminal using a terminal unit 52b located on the outside of the bobbin 52. The first and second stator members 53, 54 are connected to both sides of the bobbin 52, respectively. Each of the stator members 53, 54 has fixed sectors 53a, 54a located around the circumference thereof. The sectors 53a, 54a are spaced apart at regular intervals. The fixed sectors 53a, 54a are integrally formed around the inner circumference of the bobbin 52, and are interlocked with each other. Also, the sector-mounting grooves 52c, 52d are formed around the inner circumference of the bobbin 52. The grooves 52c, 52d are formed to cross each other. When an electrical signal is fed to the coil 52a in a specified manner, the fixed sectors 53a, 54a are magnetized accordingly. A magnetic force is generated between the magnetic fixed sectors 53a, 54a and the rotor 70. The magnetic force rotates the rotor 70 by a designated amount each time.

The rotor 70 is rotatably installed inside the stator assembly 51. Incident light L passes through hole H formed at the centre of the rotor 70, as shown in Figure 2. Therefore, the rotor does not have a shaft disposed therein. A plurality of driving pins 71 interlocked with the diaphragm unit 40 protrude from one end of the rotor 70. Although three driving pins 71 which are spaced apart at regular intervals are shown, it will be appreciated that any suitable number of driving pins may be used.

As shown in Figure 3, the rotor 70 includes a substantially cylinder-shaped magnet 73, a sleeve tube 75 connected to one end of the magnet 73, and a plate 77 connected to the other end of the magnet 73. The N-pole and the S-pole of the magnet 73 are spaced apart in the rotational direction. The sleeve tube 75 has substantially the same cylindrical shape as the magnet 73 and is connected to one end of the magnet 73. A plurality of grooves 75a are formed on the outer circumference of the sleeve tube 75. A bearing 78 is mounted in each of the grooves 75a. The bearings 78 are fitted inside the motor housing 60 and is supported thereby. The plate 77 is a circular ring (donut shaped) and is connected to the other end of the magnet 73. The plate 77 is installed such that the driving pins 71 protrude therefrom. The driving pins 71 may be directly inserted and molded to the plate 77 during the manufacturing process using an insert moulding method. The driving pins 71 are movably installed in the motor housing 60. The centre of the rotor 70 is empty, and the rotor 70 is rotatably installed inside the stator assembly 51.

The magnet 73, the sleeve tube 75, and the plate 77 are connected to each other forming a single body. The entire rotor 70 is made of magnetic materials and the driving pins 71 may be formed thereon using the insert molding method.

The motor housing 60 is located inside the lens barrel 10. The motor housing 60 includes first and second housings 61, 65 that surround the stator assembly 51.

The first housing 61 supports the bearing 78 of the rotor 70. More specifically, the first housing 61, as shown in Figures 2 and 3, cover the second stator member 54. Front and back brackets 62, 63 are coupled to each other. Each bracket 62 or 63 may be separately manufactured and then coupled to the second stator member 54. Guide grooves are formed on the edges of the brackets 62, 63 and act as guides for the bearing 78. In other words, when the rotor 70 rotates, the bearing 78 moves along the edge of each bracket 62, 63 so as to support the rotor 70. Alternatively, the brackets 62, 63 may be formed as one body. In this case, the guide groove of the bearing 78 is formed on the inner circumference of the first housing.

The second housing 65 is connected to one side of the first housing 61. The other side of the first housing 61 is connected to the stator assembly 51 situated between the first and second housings 61, 65. An opening 65a is opened and closed by the diaphragm unit 40 and is formed at the centre of the second housing 65. Also, the opening 65a is surrounded by a plurality of guide slits 65b which supports the motion of the driving pins 71. Each guide slit 65b has a length corresponding to a rotational angle of the rotor 70. The driving pins 71 are located in the guide slits 65b, and the driving pins move along the guide slits 65b when the rotor 70 rotates. This has the effect of opening and closing the opening 65a.

The second housing 65 includes a plurality of bosses 65c. Each boss 65c is preferably located around the opening 65a so that when the diaphragm unit 40 rotates by a small angle around the boss 65c, the aperture 65a is opened and closed.

The diaphragm unit 40 includes a plurality of lens shutters 41, 42, 43, and a plurality of ND (Neutral Density) filters 45, 46. The lens shutters 41, 42, 43 open and close the opening 65a so as to adjust the amount of light passing through the lens.

Referring to Figure 4, the three lens shutters 41, 42, 43 each have holes 41a, 42a, 43a, respectively, (refer to Figure 2) adapted to receive the bosses 65c. The lens shutters 41, 42, 43 also have cam slits 41b, 42b, 43b. The lens shutters 41, 42, 43 are substantially uniform in shape and size. Thus, when the driving pins 71 move along the cam slits 41b, 42b, 43b, the lens shutters 41, 42, 43 engaged with the driving pins rotate around the bosses at the same time. As a result, the size of the opening 65a can be adjusted. Each of the cam slits 41b, 42b, 43b is linear and of a designated length.

By controlling the rotational angle of the rotor 70, the linear cam slits 41b, 42b, 43b can adjust light passing through the lens shutter 40. More specifically, the cam slits alter the f number (f. no) of the light incident through the lens.

The ND filters 45, 46 are rotatably installed in the first motor housing 65. According to rotational positions of the ND filters 45, 46, the amount of incident light passing through the opened light path by the lens shutters 41, 42, 43 may be reduced. Each of the ND filters 45, 46 has substantially the same shape. Moreover, the ND filters 45 and 46 respectively include holes 45a, 46a adapted to engage the bosses 65c. The ND filters 45, 46 also have cam slits 45b, 46b. The ND filters 45, 46 are installed so that they have the same centre of rotation as certain shutters 41, 42, chosen from lens shutters 41, 42, 43. Although certain areas of ND filters 45, 46 overlap the lens shutters 41, 42, the ND filters and the lens shutters move independently of each other. The driving pins 71 engage with the cam slits 45b, 46b. Accordingly, when the rotor 70 rotates, the driving pins 71 move along the cam slits 45b, 46b. As a result, the ND filters 45, 46 rotate. Thus, the ND filters open or close the opening 65a. The cam slits 45b, 46b are linear in shape, and have a designated length. The rotation angle and speed of the ND filters 45, 46 are determined by the shape and position of the cam slits 45b, 46b, which are similar to those of the lens shutters 41, 42, 43. For example, the cam slits 45b, 46b may overlap the cam slits 41b, 42b at least at one position. When the opening 65a is completely closed, the ND filter 45 is not needed. Therefore, when the opening 65a is completely closed, the two cam slits 45b, 46b are formed to be coincident with each other.

When the lens shutters 41, 42, 43 move to open the light path gradually, the ND filter 45 preferably rotates by a smaller amount than the lens shutters 41, 42, 43 to reduce the amount of incident light passing through the opened light path. This adjusts the resolution of the lens. The larger the light path, i.e. the more opening 65a is opened, the less the cam slit 45b is overlapped with another cam slit 41b.

Additionally, the ND filters 45, 46 are installed such that the overlap with the lens shutters 41, 42 varies according to the rotational positions. The surface area of each ND filter 45, 46 has a different, smaller shape than the surface area of each lens shutter 41, 42.

The amount of overlap between the ND filter 45 and the lens shutter 41 is proportional to the openness of the opening 65a. In other words, when the opening 65a is completely opened, the ND filter 45 is completely covered by the lens shutter 41 and is completely out of the opening 65a.

The two ND filters 45, 46 may have different light transmittances. Each ND filter 45, 46 may cover the same area of the aperture 65a, but have different light transmittances. Therefore, it becomes possible to more precisely adjust the amount of incident light according to how much the aperture 65a is opened.

Referring to Figure 2, to prevent the diaphragm unit 40 from separating, a cover 80 is detachably connected to the second housing 65. The cover 80 has an opening 81 which corresponds to the opening 65a. A slit 83 which corresponds to a guide slit 65b is formed around the opening 81. A plurality of holes 85 in the second housing correspond to the bosses 65c. An elastic locking unit 87 formed around the cover 80 engages with a combining unit 65d formed on the outer circumference wall of the first housing 65.

The following describes an assembling procedure of the iris diaphragm driving device including locating the diaphragm unit 40 in the camera unit.

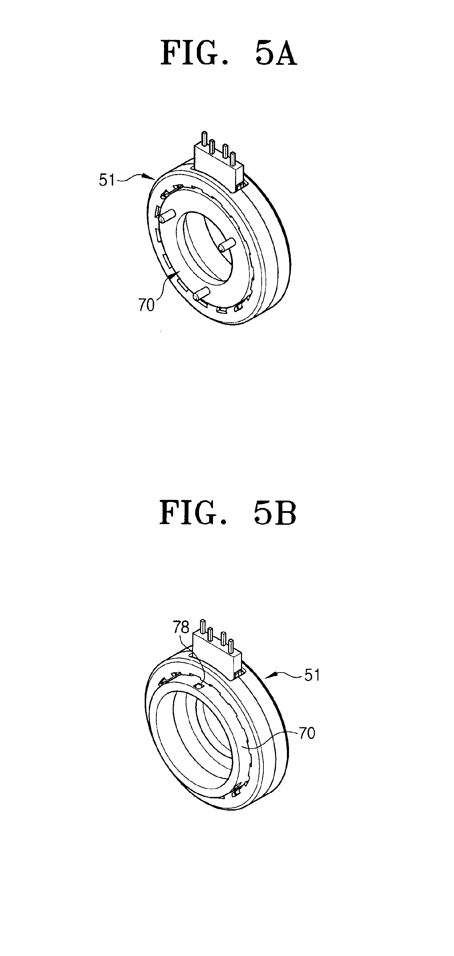

First, the stator assembly 51 of Figure 2 is assembled. Then the stator assembly 51 and the rotor 70 are put together, as shown in Figures 5A and 5B.

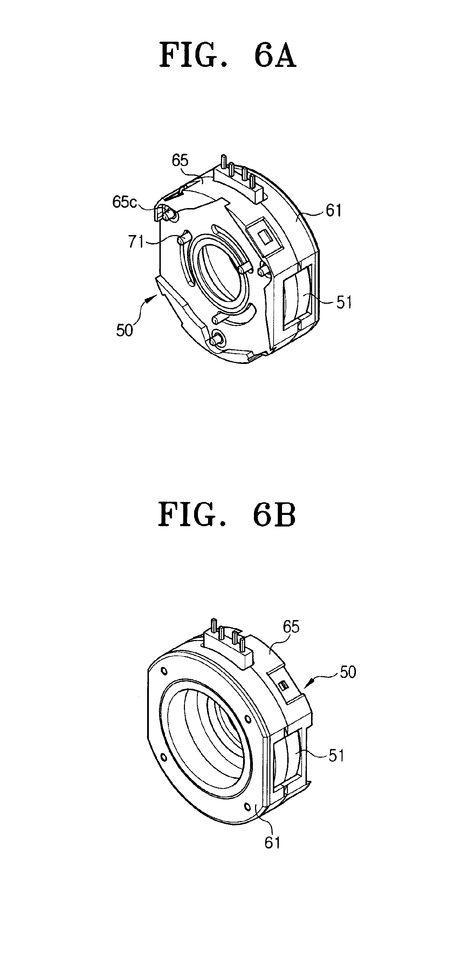

As shown in Figures 5A and 5B, the rotor 70 is located inside the stator assembly 51 but is not necessarily supported thereby. Thus, the first and second housings 61, 65 surround the stator assembly 51, as illustrated in Figures 6A and 6B. The driving pins 71 of the rotor 70 are inserted in the guide slits 65b of the second housing 65. The bearing 78 installed at the outer circumference of the rotor 70 is supported by the first housing 61. As shown in Figures 6A and 6B, once the driving unit 50 is assembled, the rotor 70 can rotate along the guide slit 65b.

Following the assembly of the driving unit 50, the ND filters 45, 46 are located on the driving pins 71 and the bosses 65, respectively. Then the lens shutters 41, 42, 43 are located on the bosses 65c to so as to overlap the ND filters 45, 46. Parts of the lens shutters 41, 42, 43 overlap the ND filters 45, 46.

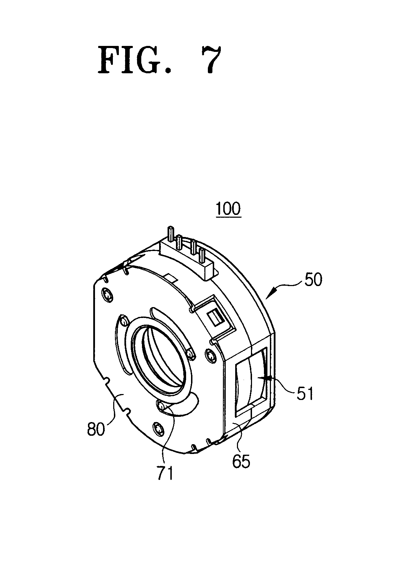

To prevent the separation of the lens shutters 41, 42, 43 and the ND filters 45, 46 assembled in the second housing 65, the cover 80, as shown in Figure 7, is assembled in the second housing 65. Thus, the iris diaphragm driving device 100 assembly is completed.

As shown in Figure 1, the assembled iris diaphragm driving device 100 is housed in the lens barrel 10. Other parts inside the lens barrel 10, namely the zoom lens module 20 and the focusing lens module 30, are assembled based on techniques.

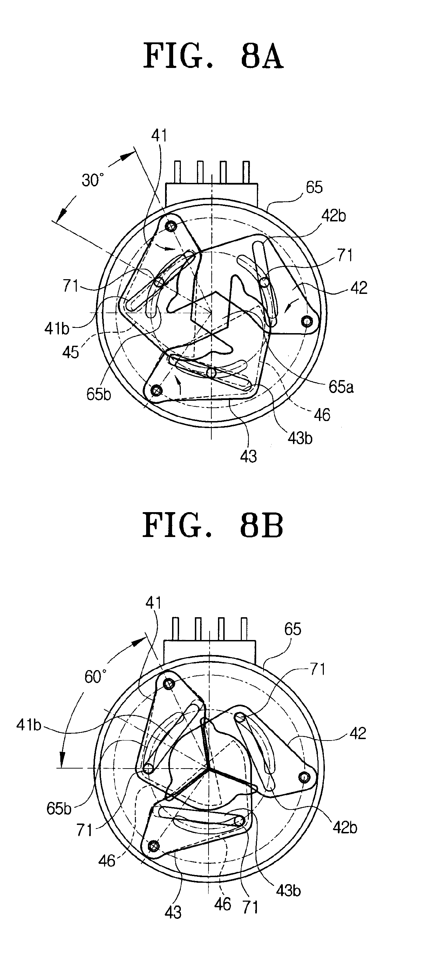

The opening and closing operation of the diaphragm unit 40 is explained below with reference to Figure 4, Figure 8A and Figure 8B.

Figure 4 shows the completely opened diaphragm unit 40. In other words, the lens shutters 41, 42, 43 and the ND filters 45, 46 do not overlap the opening 65a at all. As the ND filters 45, 46 are clear of the opening 65a, they have no influence on the amount of incident light. More specifically, when the diaphragm unit 40 is completely opened, the ND filters 45,46 are completely out of the light path so the resolution is not deteriorated.

When the rotor 70 rotates by a specified angle as shown in Figure 8A, the lens shutters 41, 42, 43 rotate by a certain angle and thus cover almost half of the opening 65a. The ND filters 45, 46 coupled to the driving pin 71 also rotate, and their rotational angle may be different from that of the lens shutters 41, 42, 43. Thus, the amount that the ND filters 45, 46 cover the opening 65a may be changed. Therefore, depending on the cam slits 45b, 46b of the ND filters 45, 46, the amount of the opening 65a that is covered (sometimes referred to as "stop down") is controlled according to the design of the cam slits 45b, 46b.

When the rotor 70 rotates further, the opening 65a is completed stopped-down (or covered) by the lens shutters 41, 42, 43, as shown in Figure 8B. In Figure 8B, the lens shutters 41, 42, 43 partially overlap each other and stop down the opening 65a. At first, the lens shutters 41, 42, 43 partially overlap each other until they reach the centre of the aperture 65a. As the driving pin 71 of the rotor 70 rotates, the interlocked cam slits 41b 42b, 43b also rotate. As a result, the lens shutters 41, 42, 43 are rotated as well. As the cam slits 41b, 42b, 43b are all linear, in order to gradually change the amount that the aperture 65a is open, or to gradually control the f number of incident light by a unit amount, the rotational angle of the rotor 70 is nonlinearly controlled. The ND filters 45, 46 which are coupled to the driving pin 71 rotate together and undergo the same movement as the lens filters 41, 42. As the cam slits 45b, 46b of the ND filters 45, 46 are linear, if the opening 65a goes from the completely opened state (Figure 4) to the completely closed state (Figure 8B), the unit amount (stop-down portion) by which the ND filters 45, 46 cover the opening 65a keeps changing. Preferably, the stop-down portion by which the ND filters 45, 46 cover the opening 65a is proportional to the stop-down portion of the opening 65a. By varying the amount that the ND filters 45, 46 cover the opening 65a according to the decrement of the amount of incident light, it becomes possible to prevent deterioration of resolution caused by diffraction. The variable exposure degree and rotational angles of the ND filters 45, 46 may be controlled by properly designing the position and shape of the cam slit 45a.

According to another embodiment shown in Figure 9, the shutters 141, 142, 143 have cam slits 141b, 142b, 143b, in which each cam slit includes a non-linear part. As shown in Figure 10, when the driving pin 71 moves through a fixed unit angle, the cam slit 141b is formed in a particular shape (that is obtained using experiments) so as to reach a certain f number (f. no). Therefore, the f number (f. no) may be controlled by rotating the rotor 70 by a fixed angle. Since the rotor 70 rotates by a fixed unit angle, it is possible to differentiate rotational angles of the lens shutters 141, 142, 143 and control of the opening 65a is thus much easier.

Additionally, as shown in Figures 11 to 13, a single ND filter 45 may be used. The ND filter 45 is rotatably installed on the driving pin 71. The ND filter 45 has the same centre of rotation as one of the lens shutters (e.g., the lens shutter 41), and the ND filter 45 and the lens shutter 41 move together almost at the same time by means of the driving pin 71.

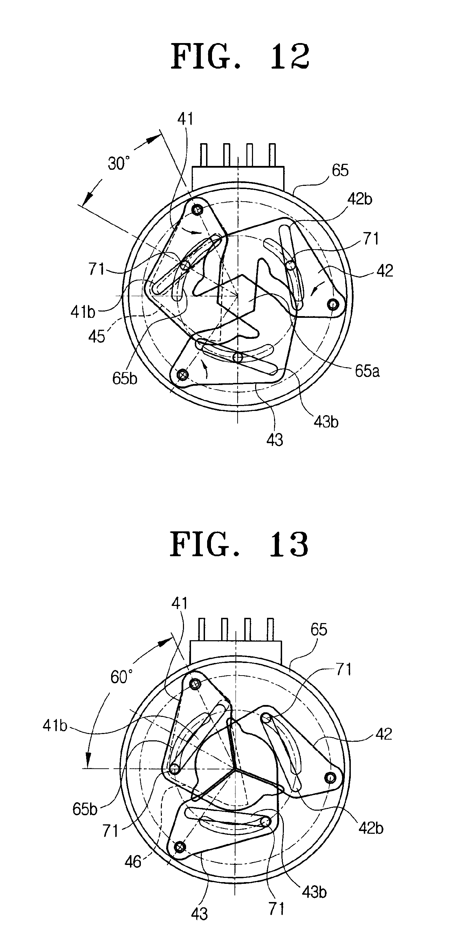

As shown in Figure 12, unlike using two ND filters 45, 46 (Figure 8a), a smaller amount of incident light passes through the opening 65a for the same size of aperture provided by opening 65a. Of course, in the case of using one single ND filter 45, the amount of incident light continuously changes depending on how much of the opening 65a is stopped-down by the lens shutters 41, 42, 43.

As described above, one or a plurality of the ND filters 45 may be used, as long as the ND filter(s) is/are installed so as to overlap the lens shutters 41, 42, 43. Thus, installation of the ND filter 45 becomes much easier, and an extra driving source for driving an additional ND filter 46 is not required. In other words, one driving source is sufficient to drive a plurality of lens shutters 41, 42, 43 and a plurality of ND filters 45, 46, individually.

By installing more than one ND filter and altering the shape of the cam slits which engage the driving pins 71, it is possible to more effectively control the amount of incident light passing through the aperture 65a, and thereby improve the resolution of images.

Also, by fitting a stepper motor inside the lens barrel, it is possible to control the lens shutters and the ND filters to move independently from each other.

Depending on how much of the light path is opened, the ND filter(s) moves independently of the lens shutters. This makes it possible to more precisely control the amount of incident light through the lens barrel. The present invention is prevents a deterioration of light transmittance at low brightness, and prevents deterioration of the resolution caused by diffraction.

## Claims

1. An iris device for a camera comprising an iris leaf (41) and a mechanism (71) for moving the iris leaf (41) to set the device's aperture (65a) **characterised by** a neutral density filter blade (45) configured to be moved by said mechanism (71) such that the neutral density filter blade (45) leads the iris leaf (41) when stopping down the aperture (65a).

2. An iris device according to claim 1, wherein the mechanism comprises a pin (71), mounted for rotation about the light path through the device, a slot (45b), having a first configuration, in the iris leaf (41) and a slot (45b), having a second configuration, in the neutral density filter blade (45), the pin (71) being received in both slots (41b, 45b) whereby rotation of the pin about said light path drives the iris leaf (41) and the blade (45) into and out of the light path.

3. An iris device according to claim 1 or 2, including a motor (70) for driving said mechanism (71).

4. An iris diaphragm of image photographing equipment, comprising:
at least one lens shutter disposed in a light path to adjust the amount of incident light by opening and closing the light path according to movement thereof; and
at least one ND filter independently movable with respect to the lens shutter to reduce the amount of incident light according to movement thereof in the light path that is opened by the lens shutter.

5. The iris diaphragm according to claim 4, wherein
the at least one lens shutter and the at least one ND filter are pivotally movable in the light path, respectively.

6. The iris diaphragm according to claim 5, wherein
the at least one lens shutter and the at least one ND filter have a common center of rotation.

7. The iris diaphragm according to claim 4, wherein
a stop-down portion of the light path by the at least one ND filter is varied according to movement of the at least one ND filter.

8. The iris diaphragm according to claim 7, wherein
the stop-down portion is inversely proportional to the openness of the light path.

9. The iris diaphragm according to claim 4, wherein
each of a plurality of ND filters have different light transmittances.

10. The iris diaphragm according to claim 4, wherein
each of a plurality of ND filters move independently of each other.

11. The iris diaphragm according to claim 4, wherein
an overlapped portion between the at least one ND filter and the at least one lens shutter is varied according to movement of the at least one ND filter.

12. The iris diaphragm according to claim 4, wherein
the at least one ND filter has a cam slit for pivoting movement.

13. The iris diaphragm according to claim 12, wherein
the cam slit has a substantially linear shape.

14. The iris diaphragm according to claim 12, wherein
the at least one lens shutter has a cam slit for pivoting movement.

15. The iris diaphragm according to claim 14, wherein
the cam slit of the at least one lens shutter and the cam slit of the at least one ND filter are overlapped with each other.

16. The iris diaphragm according to claim 15, wherein
the overlapped portion between the cam slits is inversely proportional to the openness of the light path.

17. An iris diaphragm driving device for image photographing equipment, comprising:
at least one lens shutter to open and close a light path;
at least one ND filter movable independently of the at least one lens shutter to reduce the amount of incident light passing through the light path; and
a driving unit to drive the at least one lens shutter and the at least one ND filter.

18. The iris diaphragm driving device according to claim 17, wherein
a motor housing supports the ND filter and provides the light path;
a stator assembly is installed inside the motor housing; and
a rotor is rotatably installed in the stator assembly to pivot the at least one ND filter with the rotation of the rotor.

19. The iris diaphragm driving device according to claim 18, wherein
the at least one ND filter is pivotally movable in the motor housing and is positioned in the light path according to the pivoting movement of the at least one ND filter.

20. The iris diaphragm driving device according to claim 18, wherein
the rotor has a driving pin to transfer the movement of the rotor to the pivoting movement of the at least one ND filter.

21. The iris diaphragm driving device according to claim 20, wherein
an axis boss on the motor housing supports the at least one ND filter to pivot thereon; and
a guide guides the motion of the driving pin.

22. The iris diaphragm driving device according to claim 20, wherein
the at least one ND filter has a cam slit that is shaped to engage the driving pin.

23. The iris diaphragm driving device according to claim 22, wherein
the cam slit has a substantially linear shape.

24. The iris diaphragm driving device according to claim 19, wherein
the at least one lens shutter is supported by the motor housing so that the at least one lens shutter and the at least one ND filter share the common center of rotation.

25. The iris diaphragm driving device according to claim 24, wherein
a driving pin transfers the movement of the rotor to the pivoting movement of the at least one ND filter.

26. The iris diaphragm driving device according to claim 25, wherein
the at least one ND filter and the at least one lens shutter has an axis hole supported by the motor housing, and a cam slit interoperable by the driving pin.

27. The iris diaphragm driving device according to claim 26, wherein
the cam slit of the at least one ND filter and the cam slit of the at least one lens shutter have different shapes.

28. The iris diaphragm driving device according to claim 26, wherein
the cam slit of the at least one ND filter and the cam slit of the at least one lens are partially overlapped according to the pivoting movement of the at least one ND filter and the at least one lens shutter.

29. The iris diaphragm driving device according to claim 17, wherein
the device has a plurality of lens shutters and a plurality of ND filters.

30. A camera unit, comprising:
a lens barrel;
a zoom lens module housed in the lens barrel;
a focusing lens module housed in the lens barrel;
at least one lens shutter movably installed between the zoom lens module and the focusing lens module to adjust an aperture that light passes through in response to movement of the zoom lens module and the focusing lens module;
an ND filter movably installed inside the lens barrel to reduce the amount of incident light by covering the aperture that is stopped down by the at least one lens shutter; and
a driving unit installed inside the lens barrel to drive the at least one lens shutter and the ND filter.

31. The camera unit according to claim 30, wherein
a motor housing is installed in the lens barrel to support the pivoting movement of the at least one lens shutter and the ND filter;
a stator assembly is installed in the motor housing; and
a rotor is rotatably installed in the stator assembly to pivot the at least one lens shutter and the ND filter according to rotation of the rotor.

32. The camera unit according to claim 31, wherein
the at least one lens shutter and the ND filter are pivoted together on the same axis.

33. The camera unit according to claim 31, wherein
the rotor has at least one driving pin to interoperate with the at least one lens shutter and the ND filter.

34. The camera unit according to claim 33, wherein
the at least one lens shutter and the ND filter each have an axis hole as the center of rotation; and a cam slit interoperable by the driving pin.

35. A method of controlling an iris diaphragm, the method comprising the steps of
moving at least one lens shutter to stop down an aperture that incident light passes through; and
moving at least one ND filter to cover the stop-down aperture to reduce the amount of incident light, wherein the decrement of incident light is fixed or varied according to a change of the aperture size.

36. The method according to claim 35, further comprising
moving the at least one lens shutter and moving the at least one ND filter at the same time.

37. The method according to claim 35, further comprising
moving the at least one lens shutter to reduce the amount of incident light and moving the at least one ND filter to increase the decrement of incident light in an amount inversely proportional to the amount of incident light reduced by moving the at least one lens shutter.

38. The method according to claim 35, further comprising
varying the amount of incident light with the at least one lens shutter in an amount inversely proportional to the decrement of incident light with the at least one ND filter.
